# EUROPEAN PATENT SPECIFICATION

(11) **EP 1 979 497 B1**
(45) Date of publication and mention of the grant of the patent: **07.03.2012**
(21) Application number: 07701595.6
(22) Date of filing: 09.01.2007
(51) Int. Cl.: C22B 7/00, C22B 21/06, C22B 9/22, F27B 9/20, F27D 3/08, F27D 13/00, F23G 5/027, F23G 5/44, F23G 7/00, C10B 47/44

(54) **PROCESS FOR RECYCLING ALUMINIUM-BEARING COMPOSITE MATERIALS**
VERFAHREN ZUR WIEDERVERWERTUNG VON ALUMINIUMHALTIGEN VERBUNDWERKSTOFFEN
PROCÉDÉ DE RECYCLAGE DE MATÉRIAUX COMPOSITES COMPRENANT L'ALUMINIUM

(43) Date of publication of application: 15.10.2008
(73) Proprietor: Tsl Engenharia, Manutenção E Preservação Ambiental, 04551-060 São Paulo SP (BR)
(72) Inventor: SZENTE, Roberto Nunes, 05579-020 São Paulo - SP (BR); SZENTE, Milton Oscar, 05505-030 São Paulo - SP (BR)
(74) Representative: Weiss, Peter
(86) International application number: PCT/BR2007/000009
(87) International publication number: WO 2008/083449

(56) References cited:
- EP-A2- 0 400 925
- DE-A1- 4 237 161
- GB-A- 2 265 385
- JP-A- 1 287 231
- JP-A- 56 133 432
- JP-A- 60 152 639
- US-A- 5 405 428
- US-A- 5 447 548
- US-A- 5 801 907
- US-A1- 2003 129 077
- US-B1- 6 193 780

## Description

### BACKGROUND OF THE INVENTION

The invention relates to processes and apparatus for recycling. More particularly, the invention relates to processes and apparatus for recycling composite materials.

There are several types of packaging used for food products or for different industrial products in general. Most food and industrial product packaging is typically constructed in one of the following forms: a) paper board, for example, cardboard; b) plastic, for example, polyethylene terephtalatic (PET); c) paper/plastic, for example, beverage cartons; d) plastic/aluminum laminates, for example, packaging for coffee, dry soups, dog food, chocolates, cereals, etc.; and, e) paper/plastic/aluminum, for example, beverage cartons for orange juice, milk, etc.

When the food and industrial product packaging contains only paper (as in (a)) or paper/plastic (as in case (c)), the public has already discovered processes to recycle such packaging materials. For example, paper packaging is fed into hydro-pulping equipment to desegregate the paper fibers. The separated paper fibers are then removed with water and dried in a paper machine. The resulting recycled paper may then be reused, for example, to make cardboard boxes for instance. In the case where the food and industrial product is a composite material such as paper/plastic (as in case (c)), the plastic is separated automatically in the hydro-pulping, and normally discarded since the plastic is (1) rarely made of only one type of plastic and (2) contains contaminants, which makes it difficult to reuse the plastic rejects.

When the food and industrial product packaging contains only plastic such as bottles, the recycling process involves washing, drying and grinding the plastic packaging, and extruding and melting the ground plastic packaging in order to form a new, recycled plastic product.

The recycling of food or industrial packaging becomes challenging where plastic/aluminum laminates and paper/plastic/aluminum composite materials are concerned. For example, both types of packaging typically contain a very thin piece of aluminum foil, for example, less than 10 microns thick, intimately joined with a plastic component, for example, a plastic sheet less than 100 microns thick, and paper. The paper can be recycled using recycling processes already described. However, the plastic and aluminum rejects cannot be recycled.

There are no commercial recycling processes for recycling plastic and aluminum rejects from plastic/aluminum packaging and paper/plastic/aluminum packaging due to the difficulties associated with separating the plastic from the aluminum. Moreover, whereas paper/plastic/aluminum contains one type of plastic, plastic/aluminum packaging generally utilizes more than one type of plastic. For example, the plastic component typically contains polyethylene (PE), with minor amounts of polypropylene (PP) and polyethylene terephtalatic (PET) also present. These factors contribute to the present inability to effectively recycle plastic/aluminum and paper/plastic/aluminum packaging.

Plastic/aluminum food and industrial packaging and the plastic/aluminum rejects, for example, factory wastes, spent packaging, etc., are not being properly recycled; most of these materials are being dumped into landfills or incinerated. Although incineration sounds like an efficient process, incineration possesses some operating difficulties due to the presence of the aluminum. Aluminum does not "burn" and generate gas, rather aluminum oxidizes and generates aluminum oxide, a solid waste, which needs to be periodically removed from the incinerators.

At the present time, Corenso United Oy Ltd. of Finland utilizes a pyrolysis process to recycle paper/plastic/aluminum packaging once the paper component is removed. Pyrolysis is conducted for generating a combustible gas that can be used to generate energy. However, the remaining aluminum foil, in pieces, cannot be recycled or reused. During pyrolysis, the aluminum partially oxidizes and the oxidized aluminum becomes difficult to melt. Aluminum oxide will form from the outside to the inside of the aluminum foil. Aluminum oxide melts at temperatures above 1,700°C and does not melt at temperatures of 700°C, the melting point of aluminum. Since the aluminum foil is very thin to begin with, even a thin oxide layer becomes a significant obstacle and prevents successfully melting the aluminum foil. In addition, the pyrolysis process creates aluminum/aluminum oxide residues and generates a considerable amount of burnt gases. Hence, pyrolysis is not an environmentally friendly process and fails to effectively recycle aluminum from paper/plastic/aluminum food and industrial packaging.

Further attempts to solve the problem are done in the following prior art documents:
The DE 42 37 161 A1 discloses a device for treating materials containing aluminium with an indirect heated rotating furnace with a gas tight rotating tube arranged inside of the rotating furnace, wherein within the rotating tube a conveyor means is arranged, which leads the material to be guided from a feed hopper to a removal hopper through the rotating tube, wherein inside the rotating tube there is a temperature of about 350°C to a maximum of 700°C. A sieve vibrator serves for the separation of the aluminium foil from the ash.
The JP 56133432 A discloses a device to recover metal from metal products each having a resin coat layer at a high recovering rate by heating the products to the melting point of the metal or above in a non-oxidizing atmosphere to gasify and remove the resin.
A further process for the recovery of aluminium and energy from used aluminium-plastic packages and an oven for implementing such process is described in the US 6,193,780 B1. It comprises a pretreatment for the recovery of paper, the separation of aluminium and of recyclable products by pyrolysis of polyethylene, essentially for their energy content. The product to be treated is passed into a chamber of which the walls are heated to a temperature preferably between 300°C and 500°C, the walls being inclined in order to collect into a container a heavy fraction from the polyethylene pyrolysis, whereas the light fraction, which volatilizes, is burnt. The heavy fraction of the pyrolysis drains and is collected separately from the aluminium.

A process for melting contaminated metalliferous scrap material comprising a metal and non-metallic-contaminants is shown in the EP 0 400 925 A2. The contaminated scrap material is introduced into a melting furnace, the material in the furnace interior is melted, volatile components are withdrawn from the furnace interior and molten metal is removed from the furnace. Prior to melting the metal, in order to decontaminate the material it is heated by means of a plasma at a temperature below the melting point of the metal at which non-metallic components are volatilized while displacing at least some of the material within the furnace interior.

Furthermore the GB 2 265 385 A discloses a process for recovery of useful materials from a solid composite propellant composition comprising a polymeric binder, an oxidizer and aluminium particles. The oxidizer is removed from the composition to achieve a substantially oxidizer-free composition which will be heated in the absence of oxygen to pyrolyze the polymeric binder to vaporized oils, leaving the aluminium particles as a residue. And at least a portion of the vaporized oils is condensed as a liquid oil. The liquid oil and the aluminium particles are separately recovered.

In the JP 60152639 A laminated aluminium foil scraps are successively packed through a loading port into a cavity part of a dry-distillation cylinder. A hot wind is introduced through an introducing port into an annular groove part. The aluminium foil scraps in the cylinder are thus dry distilled at the melting temperature of the aluminium component or below and is separated to the dry-distilled gas of the laminated material and the aluminium base metal.

### SUMMARY OF THE INVENTION

In accordance with the present invention, a process for recycling composite materials, comprising:
feeding a quantity of composite material comprising at least one polymer and aluminum into at least one first reactor;
heating said composite material in a non-oxidizing environment at a temperature sufficient to volatilize said at least one polymer and form a hydrocarbon by-product and aluminum in said at least one first reactor, whereby said composite material is introduced into a mixing cavity of said at least one first reactor, uniformly heated without causing said at least one polymer to deteriorate and continuously processed;
feeding said aluminum free of said at least one polymer into a second reactor;
   characterized in that
      said aluminum is heated in a non-oxidizing environment at a temperature sufficient to melt said aluminum in said second reactor; and
      heating uniformly comprises heating an entire volume of said at least one first reactor using a first internal heating element disposed in a first shaft of a first screw and a second internal heating element disposed in a second shaft of a second screw.
The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1a is a representation of a lateral view of a system for recycling composite materials;

FIG. 1b is a representation of a top view of the system of FIG. 1;

FIG. 2a is a representation of a top view of a first reactor of the system of FIGS. 1a and 1b;

FIG. 2b is a representation of a lateral view of the first reactor of FIG. 2a;

FIG. 2c is a representation of a cross-sectional view of the first reactor of FIG. 2b;

FIG. 3a is a representation of a top view of a second reactor of the system of FIGS. 1a and 1b; and

FIG. 3b is a representation of a cross-sectional view taken along lines B-B of FIG, 3a of the second reactor.

Like reference numbers and designations in the various drawings indicate like elements.

### DETAILED DESCRIPTION

As used herein, the term "hydrocarbon by-product" means a hydrocarbon composition comprising a plurality of hydrocarbon chain compositions each having about 6 to about 10,000 carbon atoms per chain, preferably about 6 to about 1000 carbon atoms per chain, most preferably about 6 to about 100 carbon atoms per chain, and existing in one or more of the following states of matter: as a solid, solid-liquid, liquid, liquid-gas or gas.

As used herein, the term "hydrocarbon product" means a hydrocarbon composition that at room temperature exists in one or more of the following states of matter: solid, solid-liquid, liquid, liquid-gas or gas.

As used herein, the term "aluminum by-product" means a by-product composed of aluminum that is free of any oxides of aluminum.

As used herein, the term "at least one first reactor" means one or a series of reactors connected together that maintain a non-oxidizing environment and operate at a temperature sufficient to volatilize polymers and form at least one hydrocarbon by-product.

As used herein, the term "a second reactor" means a reactor that maintains a non-oxidizing environment and receives aluminum free of at least one polymer.

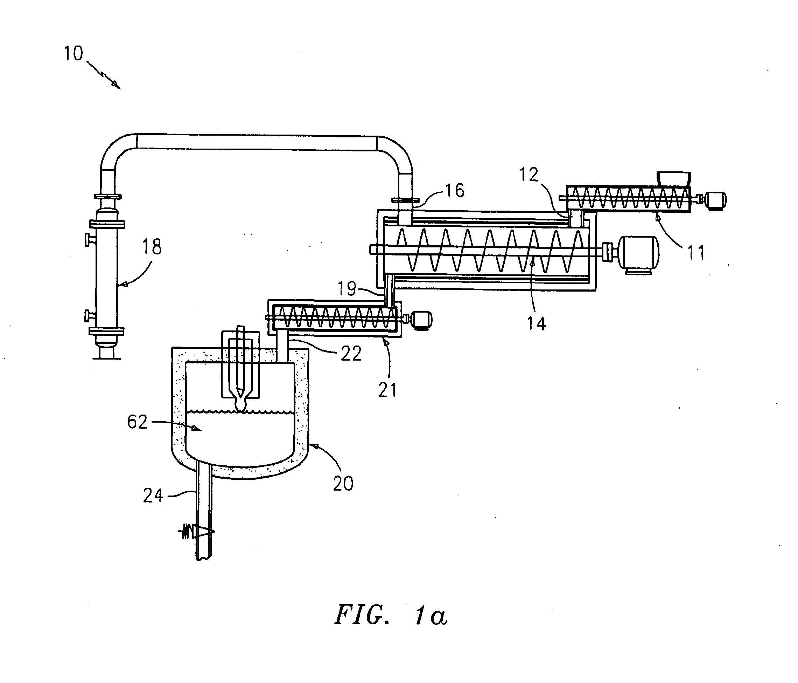

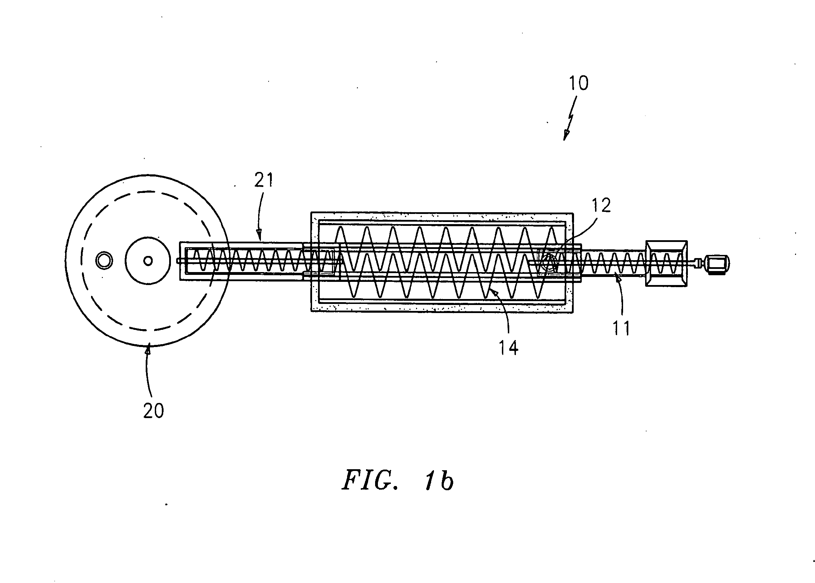

Referring now to FIGS. 1a-1b, a system 10 of the present invention is shown. The system 10 of the present invention maintains a non-oxidizing environment through the entire process. The non-oxidizing environment ensures the aluminum oxide layer present upon the aluminum does not increase in thickness and the polymer does not react to form CO, CO₂, H₂O and other undesirable by-products during the process of the present invention. The system 10 for recycling composite materials may comprise a means for feeding 11 a quantity of composite material (not shown) into an injection port 12 of at least one first reactor 14. During a first phase of the process for recycling composite materials, a composite material generally comprising at least one polymer and aluminum is introduced into the first reactor 14 through the injection port 12. An inert gas is preferred in order to maintain the desired non-oxidizing environment. The composite material may be processed at a temperature sufficient to volatilize the polymer component and form a condensable, gaseous hydrocarbon by-product and aluminum free of at least one polymer. The hydrocarbon by-product may be removed from the first reactor 14 through a hydrocarbon by-product outlet 16. The hydrocarbon by-product outlet 16 may be connected to a means for condensing 18 where the hydrocarbon by-product is condensed to form at least one hydrocarbon by-product. The outlet for processed materials may be in communication with another first reactor 14 in order to further process any remaining polymer component of the composite material, or may be in communication with an injection port 22 of a second reactor 20.

During the second phase of the process for recycling composite materials, the aluminum free of at least one polymer may be transported from an outlet for processed materials 19 of the first reactor 14 through a means for feeding 21 and into the injection port 22 of the second reactor 20. In the second reactor 20, the aluminum is heated at a temperature sufficient to melt the aluminum. Due to the absence of oxygen the aluminum oxide layer does not grow and increase in thickness. The aluminum free of at least one polymer may then be removed through an outlet 24 and cooled to form at least one aluminum by-product.

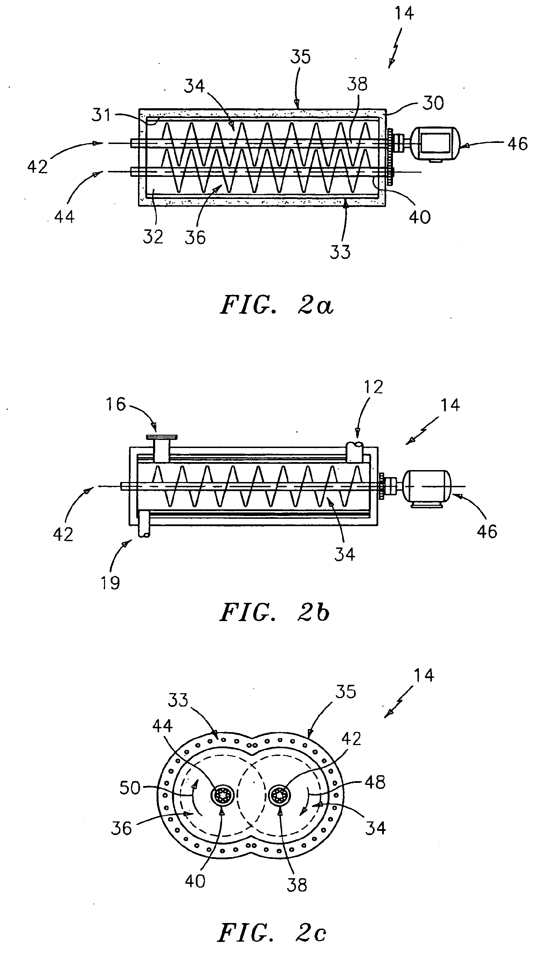

Referring now to FIGS. 2a-2c, at least one first reactor 14 may comprise a shell 30 disposed about a mixing cavity 32. The mixing cavity 32 has an interior surface 31 and is in communication with both the injection port 12 and outlets 16, 19. A quantity of thermal insulating material 35 may be disposed upon the external surface of the shell 30. The thermal insulating material may comprise, but is not limited to, fibrous ceramic materials, silica, alumina, combinations comprising at least one of the foregoing, and the like, and preferably a mixture of silica and alumina where the amount of silica present is greater than the amount of alumina present. An external heating element 33, such as an electrical heating element, may be disposed between the interior surface 31 and shell 30. The external heating element 33 serves to heat the composite material of the mixing cavity 32 during operation. The external heating element 33 may sustain a temperature sufficient to volatilize the at least one polymer component and form the condensable, gaseous hydrocarbon by-product. In addition, the external heating element 33 may also be provided outside the first reactor 14. For example, a heat source (not.shown) may provide a heated fluid, such as oil, gas, water, steam, combinations comprising at least one of the foregoing fluids, and the like, via a conduit (not shown) to the first reactor 14. The conduit may enter the first reactor 14 and be disposed between the interior surface 31 and the shell 30 so that the fluid may circulate and heat the mixing cavity 32 to a temperature sufficient to volatilize the at least one polymer component and form the condensable, gaseous hydrocarbon by-product.

To process the composite material, the first reactor 14 includes at least two screws 34, 36 comprising a first screw 34 mounted on a first shaft 38 and a second screw 36 mounted on a second shaft 40 disposed within the mixing cavity 32. Each shaft 38, 40 contain an internal heating element 42, 44 disposed therein. Like the external heating element 33, each internal heating element 42, 44 of the first reactor 14 may also heat the composite materials of the mixing cavity 32 during operation. The internal heating elements 42, 44 may comprise an electrical resistance heating element known to one of ordinary skill in the art. The internal heating elements 42, 44 may sustain a temperature sufficient to volatilize the polymer component and form the hydrocarbon by-product. Suitable electrical resistance heating elements includes, but are not limited to, nickel chrome, and the like.

Throughout the process, both internal heating elements 42, 44 are operated to ensure a uniform temperature is maintained throughout the entire volume of each first reactor 14. In addition, the external heating element 33 and both internal heating elements 42, 44 are all operated to ensure a uniform temperature is maintained throughout the entire volume of each first reactor 14. The heating elements 33, 42, 44 placement within the mixing cavity 32 provide a favorable heat transfer to the composite material and ensures the composite material heats uniformly while being processed. In addition, the thermal insulating material 35 helps prevent heat loss, or at the very least provides for minimal heat losses, from the mixing cavity 32 and further ensures temperature control, favorable heat transfer conditions and uniform heating of the composite material.

The operating temperature throughout the entire volume of each first reactor 14 may be a temperature range of about 300°C to about 700°C, and preferably a range of about 400°C to about 600°C. The process of the present invention may be operated under a vacuum, rather than at atmosphere. However, whether operating the process under a vacuum or at atmosphere, the operating temperature is no less than at least about 400°C, as this temperature is necessary to volatilize the at least one polymer component present within the composite materials. These operating temperature ranges prevent the polymer component from deteriorating while being processed, and also promotes the generation of condensable, gaseous hydrocarbon by-products. When processing the polymer component(s) at a temperature below or above the ranges indicated, the polymer component can volatilize and form non-condensable, gaseous hydrocarbon by-products or both non-condensable, gaseous hydrocarbon by-products and soot. Soot, in turn, will contaminate the aluminum that remains after the polymer component(s) have been volatilized and removed during the first phase of the process carried out by the system 10 of the present invention.

The screws 34, 36 may driven by a means for driving 46 disposed externally to the first reactor 14. The means for driving 46 may comprise any type of mechanical device capable of causing the screws 34, 36 to rotate simultaneously in the same direction and at the same speed about their shafts 38, 40. For example, the first screw 34 may rotate at the same speed in a first direction indicated by an arrow 48 and the second screw 36 may rotate in a second direction indicated by an arrow 50 as depicted in FIG. 2c. One of ordinary skill in the art will recognize the screw operating conditions may be altered yet still accomplish the desired effects of the process of the present invention.

The screws 34, 36 are disposed adjacent to each other such that the screws 34, 36 are parallel to each other and do not make contact with one another. Each screw 34, 36 include a blade disposed along their shaft 38, 40, respectively, such that the blade is concentrically disposed about each shaft like a corkscrew and forms a plurality of blades and channels between each blade. Generally, the corkscrew orientation of the blade is commonly referred to as the helix of the screw. Being helically shaped, the blade(s) of each screw 34, 36 are curved from the tip to the shaft such that the surface of each blade is concave in nature. During operation, the first screw 34 rotates about the shaft 38 and the first helix of the first screw 34 enters the channels of the second helix of the second screw 36. The movement and orientation of the first helix through the channels of the second helix remove any molten polymer composition(s) from the screw 34 and shaft 40 and effectively clean screw 34 and shaft 40. The continual movement of the first, second screws 34, 36 effectuate the continual movement of the molten polymer component(s) along each screw 34, 36 and prevent the molten polymer component(s) from agglomerating within the mixing cavity 32 and along either screw 34, 36. Typically, as the polymer component(s) melt, the layers of polymer may form a thicker layer which can form a ball of molten polymer component(s) while rotating within a mixing cavity. The movement and orientation of the screws 34, 36 effectively prevent such agglomeration of molten polymer component(s) from occurring.

More specifically, as the first and second screws 34, 36 rotate simultaneously at the same speed and in the same direction, at least one first blade of the first screw rotates through at least one second channel of the second screw. As the first blades rotates, the first blade moves back and forth axially relative to a position of the second shaft of the second screw. The curvature of each first blade's surface facilitates this back and forth axial movement within each second channel relative to the position of the second shaft of the second screw. In contrast, a blade having no curvature, that is a flat shaped blade, and disposed perpendicularly to a second screw would not move axially back and forth within a channel of the second screw relative to a position of the second shaft of the second screw. Throughout the rotation of the screws and this back and forth axial motion of the first and second blades, the composite material is being processed by the first and second screws 34, 36 within the reactor 14. At the same time, the tip of the first blade is also removing the processed composite material from the shaft of the second screw and effectively cleaning the second shaft 40 and second screw 36. As the first blades of the first screw 34 clean the second screw 36, the second blades of the second screw 36 are also operating in the same manner to remove the processed composite material from the shaft of the first screw 34 and effectively clean the first shaft 38 and first screw 34.

For purposes of example, and not to be taken in a limiting sense, the dimensions of the first reactor may be sized accordingly with the intended processing conditions and industrial purpose. For example, each screw may have a length of about 1 meter to about 30 meters. Each screw may have a diameter of about 10 centimeters to about 150 centimeters. Each first blade of the first screw may be disposed about 1 millimeter to about 50 millimeters from each second blade and the second shaft of the second screw. And, each second blade of the second screw may be disposed about 1 millimeter to about 50 millimeters from each first blade and the first shaft of the first screw. A tip of each first blade may be positioned about 1 millimeter to about 50 millimeters from the second shaft of the second screw. And, a second tip of each second blade may be positioned about 1 millimeter to about 50 millimeters from the first shaft of said first screw.

Prior to volatilization, the polymer component(s) begin as large hydrocarbon chain compositions having more than about 100,000 carbon atoms per chain. During volatilization, the polymer component(s) begin breaking down into smaller hydrocarbon chain compositions each having less than about 100,000 carbon atoms per chain. As volatilization nears completion, the polymer component(s) break down into a plurality of small hydrocarbon chain compositions each having about 6 to about 10,000 carbon atoms per chain, preferably about 6 to about 1,000 carbon atoms per chain, most preferably about 6 to about 100 carbon atoms per chain, which forms the hydrocarbon by-product.

The hydrocarbon by-product preferably comprises hydrocarbon chains comprising no less than 6 carbon atoms per chain and no more than 100 carbon atoms per chain. Hydrocarbon chain compositions falling within the enumerated carbon atoms per chain range form condensable, gaseous hydrocarbon by-products under the operating conditions maintained within the first reactors 14. Such condensable, gaseous hydrocarbon by-products may be condensed to form hydrocarbon by-products desired by the market, for example, paraffinic compounds; a commodity that commands high market value. In contrast, hydrocarbon chain compositions containing less than 6 carbon atoms per chain form non-condensable, gaseous hydrocarbon by-products such as methane, ethane, propane and butane, which as commodities command far lower market value. Hydrocarbon chain compositions containing more than 100 carbon atoms per chain are unlikely to be generated in a gas form.

Throughout processing the composite material, the hydrocarbon by-product may be removed through the outlet 16 during the process. The hydrocarbon by-product may be condensed into a hydrocarbon product using a means for condensing 18. The means for condensing 18 may comprise any device capable of condensing hydrocarbons as known to one of ordinary skill in the art. When performing the process of the present invention, at least one hydrocarbon product is formed upon condensing the hydrocarbon by-product. For example, the hydrocarbon product may comprise a paraffin composition that contains paraffin in part (solid) and paraffinic oil in part (liquid) at room temperature. Depending upon the operating conditions of the means for condensing 18, any number of hydrocarbon products may be produced using the process of the present invention as the paper/plastic/aluminum and plastic/aluminum food and industrial packaging being recycled may each contain one or more different polymers.

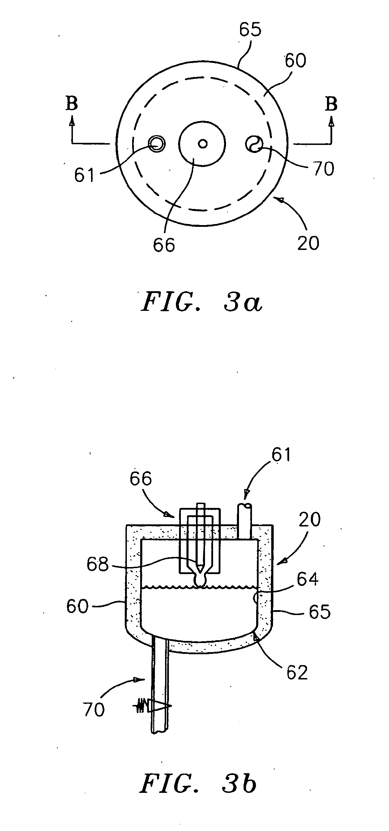

Once the polymer component(s) of the composite material have been volatilized and only aluminum remains, the pieces of aluminum coated with a thin film of aluminum oxide are transported into an injection port 61 of the second reactor 20 using a means for transporting 21 as known to one of ordinary skill in the art. Referring now to FIGS. 3a and 3b, the second reactor 20 preferably maintains a non-oxidizing environment and may comprise a shell 60 disposed about a cavity 62. The cavity 62 houses a melt bath 64 having a coating disposed thereupon. The coating comprises at least one material possessing refractory characteristics. Suitable materials possessing refractory characteristics for use herein may include, but are not limited to, silica, alumina, combinations comprising at least one of the foregoing, and the like, and preferably a mixture comprising about 70% by weight to 90% by weight of alumina and silica in the remainder. A quantity of thermal insulating material 65 may be disposed upon the external surface of the shell 60 in order to prevent heat loss, or at the very least provides for minimal heat losses, from the cavity 62. Suitable thermal insulating materials include, but are not limited to, fibrous ceramic materials, silica, alumina, combinations comprising at least one of the foregoing materials, and the like, and preferably a mixture of silica and alumina where the amount of silica present is greater than the amount of alumina present.

A plasma heating system 66 may be mounted to the shell 60 such that a plasma heating device 68 is disposed within the cavity 62. The plasma heating device 68 may be disposed proximate to and above the melt bath such that the device 68 can move back and forth across the surface of the melt bath and melt the aluminum free of at least one polymer component. A suitable plasma heating device 68 for use herein may comprise a swivable, transferable or non-transferable plasma torch capable of moving in any and all directions across the surface of the melt bath, for example, a sweeping motion, and capable of generating at least enough heat to break the aluminum oxide film and melt aluminum. Any number of inert gases as known to one of ordinary skill in the art may be utilized as the plasma gas. An inert gas, such as Ar, is preferred in order to maintain the non-oxidizing environment within the second reactor 20. The plasma heating device 68 may generate an electric arc having a temperature above about 10,000°C (18,032°F) which far exceeds the temperature of about 660°C (1220°F), the melting point of aluminum or about 1,700°C (3,092°F), the melting point of aluminum oxide. The aluminum oxide film melts and releases the aluminum contained within the oxide shell. Due to the absence of oxygen, the resulting aluminum liquid should be free of any oxides of aluminum.

As pieces of aluminum enter the melt bath 64, the plasma torch moves in a sweeping motion above the aluminum. The plasma torch arc strikes the aluminum and forms molten aluminum droplets and a layer of dross forms atop the molten aluminum. As additional aluminum enters the melt bath 64 and melts, a layer of dross forms and floats atop the molten aluminum. The dross layer insulates the molten aluminum from the high temperatures generated by the plasma torch. At the very surface of the dross layer having a thickness of about 1 millimeter to about 2 millimeters, the temperature reaches between about 2,000°C to about 3,000°C. However, the temperature drops considerably below the dross surface such that the dross layer effectively insulates the molten aluminum. As a result, the molten aluminum can be maintained at a temperature of no more than about 800°C during the process. Throughout the process, a graphite tool (not shown) may be used to periodically skim the surface of the melt bath 64 and remove the layer of dross. One of ordinary skill in the art will recognize any tool may be incorporated to achieve this purpose as well. As pieces of aluminum continually enter the second reactor 20, molten aluminum is also tapped in order to maintain a constant melt bath level. When tapping the molten aluminum, the molten aluminum may be cooled to a temperature of about 600°C. The resulting melted aluminum may be removed from the cavity 62 via an outlet 70 to form at least one aluminum by-product.

As discussed, paper/plastic/aluminum and plastic/aluminum packaging materials are not being recycled and/or not being recycled completely due to the intrinsic difficulties in separating plastic and aluminum as well as each component's physical and chemical properties. Common thermal separation (e.g., pyrolysis) of the two components is very difficult due to the heat transfer limitations caused by the plastic component and the insufficient weight of the aluminum in order to break up the aluminum oxide layer. Other prior art recycling processes, including chemical separation, have not succeeded either economically or environmentally.

The system and process of the present invention successfully recycles both paper/plastic/aluminum and plastic/aluminum packaging materials. Plastics composed of one or more polymers and aluminum of any thickness may now be separated and recycled rather than disposed as waste material. The system and process of the present invention possesses several advantages in carrying out this successful endeavor.

The process of the present invention is environmentally friendly. The process does not generate any type of environmentally harmful residue or toxic gaseous or liquid effluents. Throughout the process, the composite material is processed in sealed reactors and the release of the hydrocarbon by-product and aluminum by-product is controlled. And, unlike prior art methods for recycling plastic, plastic/aluminum or paper/plastic/aluminum composite materials, the process of the present invention does not require additional reagents to effectuate processing the composite materials.

The process of the present invention avoids the most common obstacle that has, until now, prevented recycling plastic/aluminum and paper/plastic/aluminum packaging. By maintaining non-oxidizing atmospheres and controlling the temperature throughout the process, aluminum oxide cannot form and prevent the recycling process. As a result, the hydrocarbon by-product and aluminum by-products in turn exhibit homogeneity, which equals quality.

The process of the present invention employs specially designed sealed reactors to ensure the composite materials are processed efficiently. The use of a specially designed sealed vessel and double self-cleaning screws permits the uniform heating and continuous processing of the polymer(s) in the composite material. This ensures the plastic does not deteriorate during the process. The use of a specially designed plasma system permits the melting of aluminum of any size and thickness, even when they are very thin. As a result, any aluminum oxide existing previously from the shell, the plasma system melts the aluminum oxide layer and releases the molten aluminum.

The process of the present invention is not only successful over failed attempts by the prior art but also efficient. The prior art processes typically lose at least forty percent (40%) of the aluminum when recycling plastic/aluminum and paper/plastic/aluminum composite materials. As a result, prior art processes cannot recover more than sixty percent (60%) of the aluminum when recycling these composite materials. The process of the present invention recovers at least approximately 90% of the aluminum. The overall energy efficiency of the process of the present invention is greater than approximately seventy-five percent (75%). The high efficiency is due in part to the intrinsic characteristics of the heating sources, that is, the external and internal heating sources and plasma torch, and also in part to the orientation of the heating sources and thermal insulation material within and about each reactor.

One or more embodiments of the present invention have been described. Nevertheless, it will be understood that various modifications may be made without departing from the spirit and scope of the invention. Accordingly, other embodiments are within the scope of the following claims.

## Claims

1. A process for recycling composite materials, comprising:
feeding a quantity of composite material comprising at least one polymer and aluminum into at least one first reactor (14);
heating said composite material in a non-oxidizing environment at a temperature sufficient to volatilize said at least one polymer and form a hydrocarbon by-product and aluminum in said at least one first reactor (14), whereby said composite material is introduced into a mixing cavity (32) of said at least one first reactor (14), uniformly heated without causing said at least one polymer to deteriorate and continuously processed;
feeding said aluminum free of said at least one polymer into a second reactor (20);
**characterized in that**
said aluminum is heated in a non-oxidizing environment at a temperature sufficient to melt said aluminum in said second reactor (20); and
heating uniformly comprises heating an entire volume of said at least one first reactor (14) using a first internal heating element (42) disposed in a first shaft (38) of a first screw (34) and a second internal heating element (44) disposed in a second shaft (40) of a second screw (36).

2. The process of claim 1, wherein heating said composite material comprises heating uniformly said composite material within a temperature range of between about 300°C to about 700°C.

3. The process of claim 2, wherein said temperature range is between about 400°C to about 600°C.

4. The process of claim 1, wherein heating said composite material comprises forming a condensable, gaseous hydrocarbon by-product.

5. The process of claim 1, wherein heating said composite material comprises forming at least one paraffinic compound.

6. The process of claim 1, wherein heating uniformly comprises heating an entire volume of said at least one first reactor (14) using an external heating element (33), a first internal heating element (42) and a second internal heating element (44) of said at least one first reactor (14).

7. The process of claim 6, wherein heating said entire volume of said at least one first reactor (14) comprises;
heating said composite material using said external heating element (33) disposed between said mixing cavity (32) and a shell (30) of said at least one first reactor (14); and
heating said composite material using said first internal heating element (42) disposed within a first screw (34) and a second internal heating element (44) disposed within a second screw (36) of said at least one first reactor (14).

8. The process of claim 1, wherein processing continuously comprises:
rotating simultaneously a first screw (34) and a second screw (36) at the same speed and in the same direction within said first reactor (14);
rotting at least one first blade of said first screw (34) through at least one second channel of said second screw (36), wherein said at least one first blade moves back and forth axially relative to the second shaft (40) while said first screw (34) and said second screw (36) rotate;
rotating at least one second blade of said second screw (36) through at least one first channel of said first screw (34), wherein said at least one second blade moves back and forth axially relative to the first shaft (38) while said first screw (34) and said second screw (36) rotate;
processing said composite material with said first screw (34) and said second screw (36);
cleaning a surface of said first screw (34) using said at least one second blade to remove said processed composite material from said first screw (34); and
cleaning a surface of said second screw (36) using said at least one first blade to remove said processed composite material from said second screw (36).

9. The process of claim 1, further comprising after said hydrocarbon by-product forms:
removing said hydrocarbon by-product from said at least one first reactor (14); and
condensing said hydrocarbon by-product.

10. The process of claim 1, wherein heating said aluminum comprises:
applying a plasma arc in a sweeping motion to said aluminum to form a quantity of molten aluminum and a layer of dross upon said molten aluminum; and
maintaining said quantity of molten aluminum at a temperature of no more than about 800°C.

11. The process of claim 10, wherein applying said plasma arc comprises generating said plasma arc using a plasma torch.

12. The process of claim 10, further comprising:
skimming a quantity of said dross layer from a surface of said molten aluminum; and
repeating said skimming step at intervals of about thirty minutes to about sixty minutes throughout the process.

13. The process of claim 10, further comprising insulating said quantity of molten aluminum using said layer of dross having a temperature of about 2,000°C to about 3,000°C.

14. The process of claim 1, further comprising:
tapping said second reactor (20) to remove said molten aluminum;
maintaining a constant level of molten aluminum within said second reactor (20); and
recovering said aluminum free of said at least one polymer.

15. The process of claim 14, wherein recovering comprises recovering at least about 90 percent of said aluminum free of said at least one polymer from said composite material.

16. The process of claim 1, further comprising operating the process at an energy efficiency of greater than about 75 percent.

## Patentansprüche

1. Verfahren zum Recyceln von Kompositmaterial, welches umfasst:
das Zuführen einer Menge von Kompositmaterial, welches zumindest ein Polymer und Aluminium aufweist, zu zumindest einem ersten Reaktor (14);
das Erhitzen des Kompositmaterials in einer nicht-oxidierenden Umgebung bei einer Temperatur, welche ausreicht, um das zumindest eine Polymer verflüchtigen zu lassen und ein Kohlenwasserstoff-Nebenprodukt und Aluminium in dem zumindest einen ersten Reaktor (14) zu bilden, wobei das Kompositmaterial in eine Mischkammer (32) des zumindest einen ersten Reaktors (14) eingebracht wird, gleichmässig erhitzt wird, ohne dass das zumindest eine Polymer verfällt, und kontinuierlich weiterverarbeitet wird;
das Zuführen des aluminiumfreien zumindest einen Polymers in einen zweiten Reaktor (20);
**dadurch gekennzeichnet,**
**dass** das Aluminium in einer nicht-oxidierenden Umgebung bei einer Temperatur erhitzt wird, welche ausreicht, um das Aluminium in dem zweiten Reaktor (20) zu schmelzen; und
einheitliches Erhitzen das Erhitzen des gesamten Volumens des zumindest einen ersten
Reaktors (14) unter Verwendung eines ersten inneren Heizelementes (42) umfasst, welches in einem ersten Schaft (38) einer ersten Schraube (34) angeordnet ist, und einem zweiten inneren Heizelement (44), welches in einem zweiten Schaft (40) einer zweiten Schraube (36) angeordnet ist.

2. Verfahren nach Anspruch 1, wobei das Erhitzen des Kompositmaterials das einheitliche Erhitzen des Kompositmaterials innerhalb eines Temperaturbereiches von zwischen ungefähr 300°C und ungefähr 700°C umfasst.

3. Verfahren nach Anspruch 2, wobei der Temperaturbereich zwischen ungefähr 400°C und ungefähr 600°C liegt.

4. Verfahren nach Anspruch 1, wobei das Erhitzen des Kompositmaterials das Bilden eines kondensierbaren, gasförmigen Kohlenwasserstoff-Nebenproduktes umfasst.

5. Verfahren nach Anspruch 1, wobei das Erhitzen des Kompositmaterials das Bilden zumindest einen paraffinischen Bestandteils umfasst.

6. Verfahren nach Anspruch 1, wobei das einheitliche Erhitzen das Erhitzen des gesamten Volumens des zumindest einen ersten Reaktors (14) unter Verwendung eines externen Heizelementes (33), eines ersten inneren Heizelementes (42) und eines zweiten inneren Heizelementes (44) des zumindest einen ersten Reaktors (14) umfasst.

7. Verfahren nach Anspruch 6, wobei das Erhitzen des gesamten Volumens des zumindest einen ersten Reaktors (14) umfasst:
das Erhitzen des Kompositmaterials unter Verwendung des externen Heizelementes (33), welches zwischen der Mischkammer (32) und einer Hülle (30) des zumindest einen ersten Reaktors (14) angeordnet ist; und
das Erhitzen des Kompositmaterials unter Verwendung des ersten inneren Heizelementes (42), welches innerhalb einer ersten Schraube (34) angeordnet ist, und eines zweiten inneren Heizelementes (44), welches innerhalb einer zweiten Schraube (36) des zumindest einen ersten Reaktors (14) angeordnet ist.

8. Verfahren nach Anspruch 1, wobei die kontinuierliche Bearbeitung umfasst:
das gleichzeitige Drehen einer ersten Schraube (34) und einer zweiten Schraube (36) mit der gleichen Geschwindigkeit und in dieselbe Richtung innerhalb des ersten Reaktors (14);
das Drehen zumindest eines ersten Messers der ersten Schraube (34) durch zumindest einen zweiten Kanal der zweiten Schraube (36), wobei das zumindest eine erste Messer sich axial relativ zu dem zweiten Schaft (40) zurück und vor bewegt, während sich die erste Schraube (34) und die zweite Schraube (36) drehen;
das Drehen zumindest eines zweiten Messers der zweiten Schraube (36) durch zumindest einen ersten Kanal der ersten Schraube (34), wobei das zumindest eine zweite Messer sich axial relativ zu dem ersten Schaft (38) zurück und vor bewegt, während sich die erste Schraube (34) und die zweite Schraube (36) drehen;
das Bearbeiten des Kompositmaterials mit der ersten Schraube (34) und der zweiten Schraube (36);
das Reinigen einer Oberfläche der ersten Schraube (34) unter Verwendung des zumindest einen zweiten Messers, um das verarbeitete Kompositmaterial von der ersten Schraube (34) zu entfernen; und
das Reinigen einer Oberfläche der zweiten Schraube (36) unter Verwendung des zumindest einen ersten Messers, um das verarbeitete Kompositmaterial von der zweiten Schraube (36) zu entfernen.

9. Verfahren nach Anspruch 1, welches nach der Bildung des Kohlenwasserstoff-Nebenproduktes umfasst;
das Entfernen des Kohlenwasserstoff-Nebenproduktes aus dem zumindest einen ersten Reaktors (14); und
das Kondensieren des Kohlenwasserstoff-Nebenproduktes.

10. Verfahren nach Anspruch 1, wobei das Erhitzen des Aluminiums umfasst:
das Anlegen eines Plasmabogens in einer ausladenden Bewegung an das Aluminium, um eine Menge geschmolzenen Aluminiums und eine Schicht Schlacke auf dem geschmolzenen Aluminium zu bilden; und
das Beibehalten der geschmolzenen Aluminiummenge bei einer Temperatur von nicht mehr als ungefähr 600°C.

11. Verfahren nach Anspruch 10, wobei das Anlegen des Plasmabogens das Erzeugen des Plasmabogens unter Verwendung eines Plasmabrenners umfasst.

12. Verfahren nach Anspruch 10, ferner umfassend:
das Abschöpfen einer Menge der Schlackeschicht von einer Oberfläche des geschmolzenen Aluminiums; und
das Wiederholen des Abschöpfschrittes in Intervallen von ungefähr 30 Minuten bis ungefähr 60 Minuten während des Verfahrens.

13. Verfahren nach Anspruch 10, welches ferner das Isolieren der geschmolzenen Aluminiummenge unter Verwendung der Schlackeschicht umfasst, welche eine Temperatur von ungefähr 2,000°C bis ungefähr 3,000°C aufweist.

14. Verfahren nach Anspruch 1, ferner umfassend:
das Anzapfen des zweiten Reaktors (20), um das geschmolzene Aluminium zu entfernen;
das Beibehalten eines konstanten Levels an geschmolzenem Aluminium in dem zweiten Reaktor (20); und
das Gesunden des Aluminiumfreien des zumindest einen Polymers.

15. Verfahren nach Anspruch 14, wobei das Gesunden das Gesunden von zumindest ungefähr 90% des Aluminiumfreien des zumindest einen Polymers von dem Kompositmaterial umfasst.

16. Verfahren nach Anspruch 1, welches ferner den Betrieb des Verfahrens bei einer Energieeffizienz von mehr als ungefähr 75% umfasst.

## Revendications

1. Procédé de recyclage de matériaux composites, comprenant les étapes consistant à :
- charger une quantité de matériau composite, comprenant au moins un polymère et de l'aluminium, dans au moins un premier réacteur (14) ;
- chauffer ledit matériau composite dans un environnement non oxydant à une température suffisante pour volatiliser ledit au moins un polymère et former un sous-produit d'hydrocarbure et de l'aluminium dans ledit au moins un premier réacteur (14), ledit matériau composite étant introduit dans une cavité de mélange (32) dudit au moins un premier réacteur (14), chauffé uniformément sans provoquer de détérioration dudit au moins un polymère et traité continuellement ;
- charger ledit aluminium débarrassé dudit au moins un polymère dans un second réacteur (20) ;
- **caractérisé en ce que** :
- ledit aluminium est chauffé dans un environnement non oxydant à une température suffisante pour faire fondre ledit aluminium dans ledit second réacteur (20) ; et
- l'étape de chauffage uniforme comprend une étape consistant à chauffer un volume entier dudit au moins un premier réacteur (14) au moyen d'un premier élément chauffant interne (42) disposé dans un premier arbre (38) d'une première vis (34) et d'un second élément chauffant interne (44) disposé dans un second arbre (40) d'une seconde vis (36).

2. Procédé selon la revendication 1, dans lequel l'étape de chauffage dudit matériau composite comprend une étape consistant à chauffer uniformément ledit matériau composite dans une plage de température comprise entre environ 300 °C et environ 700 °C.

3. Procédé selon la revendication 2, dans lequel ladite plage de température est comprise entre environ 400 °C et environ 600 °C.

4. Procédé selon la revendication 1, dans lequel l'étape de chauffage dudit matériau composite comprend une étape consistant à former un sous-produit d'hydrocarbure gazeux condensable.

5. Procédé selon la revendication 1, dans lequel l'étape de chauffage dudit matériau composite comprend une étape consistant à former au moins un composé paraffinique.

6. Procédé selon la revendication 1, dans lequel l'étape de chauffage uniforme comprend une étape consistant à chauffer un volume entier dudit au moins un premier réacteur (14) au moyen d'un élément chauffant externe (33), d'un premier élément chauffant interne (42) et d'un second élément chauffant interne (44) dudit au moins un premier réacteur (14).

7. Procédé selon la revendication 6, dans lequel l'étape de chauffage dudit volume entier dudit au moins un premier réacteur (14) comprend les étapes consistant à :
- chauffer ledit matériau composite au moyen dudit élément chauffant externe (33) disposé entre ladite cavité de mélange (32) et une enveloppe (30) dudit au moins un premier réacteur (14) ; et
- chauffer ledit matériau composite au moyen dudit premier élément chauffant interne (42) disposé dans une première vis (34) et d'un second élément chauffant interne (44) disposé dans une seconde vis (36) dudit au moins un premier réacteur (14).

8. Procédé selon la revendication 1, dans lequel l'étape de traitement continuel comprend les étapes consistant à :
- entraîner en rotation simultanément une première vis (34) et une seconde vis (36) à la même vitesse et dans la même direction dans ledit premier réacteur (14) ;
- entraîner en rotation au moins une première ailette de ladite première vis (34) dans au moins un second canal de ladite seconde vis (36), ladite au moins une première ailette allant et venant axialement relativement au second arbre (40) pendant que ladite première vis (34) et ladite seconde vis (36) tournent ;
- entraîner en rotation au moins une seconde ailette de ladite seconde vis (36) dans au moins un premier canal de ladite première vis (34), ladite au moins une seconde ailette allant et venant axialement relativement au premier arbre (38) pendant que ladite première vis (34) et ladite seconde vis (36) tournent ;
- traiter ledit matériau composite avec ladite première vis (34) et ladite seconde vis (36) ;
- nettoyer une surface de ladite première vis (34) au moyen de ladite au moins une seconde ailette pour retirer ledit matériau composite traité de ladite première vis (34) ; et
- nettoyer une surface de ladite seconde vis (36) au moyen de ladite au moins une première ailette pour retirer ledit matériau composite traité de ladite seconde vis (36).

9. Procédé selon la revendication 1, comprenant en outre, après l'étape de formation dudit sous-produit d'hydrocarbure, les étapes consistant à :
- retirer ledit sous-produit d'hydrocarbure dudit au moins un premier réacteur (14) ; et
- condenser ledit sous-produit d'hydrocarbure.

10. Procédé selon la revendication 1, dans lequel l'étape de chauffage dudit aluminium comprend les étapes consistant à :
- appliquer un arc de plasma avec un mouvement de balayage audit aluminium pour former une quantité d'aluminium en fusion et une couche de croûte sur ledit aluminium en fusion ; et
- maintenir ladite quantité d'aluminium en fusion à une température inférieure ou égale à environ 800 °C.

11. Procédé selon la revendication 10, dans lequel l'étape d'application dudit arc de plasma comprend une étape consistant à générer ledit arc de plasma au moyen d'un chalumeau à plasma.

12. Procédé selon la revendication 10, comprenant en outre les étapes consistant à :
- éliminer une quantité de ladite couche de croûte d'une surface dudit aluminium en fusion ; et
- répéter ladite étape d'élimination à intervalles d'environ trente minutes à environ soixante minutes sur toute la durée du procédé.

13. Procédé selon la revendication 10, comprenant en outre une étape consistant à isoler ladite quantité d'aluminium en fusion au moyen de ladite couche de croûte portée à une température d'environ 2000°C à environ 3000°C.

14. Procédé selon la revendication 1, comprenant en outre les étapes consistant à
- décharger ledit second réacteur (20) pour évacuer ledit aluminium en fusion ;
- maintenir un niveau constant d'aluminium en fusion dans ledit second réacteur (20) ; et
- récupérer ledit aluminium débarrassé dudit au moins un polymère.

15. Procédé selon la revendication 14, dans lequel l'étape de récupération comprend une étape consistant à récupérer au moins environ 90 % dudit aluminium débarrassé dudit au moins un polymère à partir dudit matériau composite.

16. Procédé selon la revendication 1, consistant en outre à mettre en oeuvre le procédé avec un rendement énergétique supérieur à environ 75 %.
